# EUROPÄISCHE PATENTSCHRIFT

(11) **EP 0 927 923 B1**
(45) Veröffentlichungstag und Bekanntmachung des Hinweises auf die Patenterteilung: **09.04.2003**
(21) Anmeldenummer: 98123466.9
(22) Anmeldetag: 11.12.1998
(51) Int. Cl.: G06F 1/16

(54) **Computer bestehend aus einer Systemeinheit, einer Tastatureinheit sowie einer Anzeigeeinheit mit Telekommunikationseinrichtung und Scharnier**
Computer with telecommunication device and comprising a system unit, a keyboard unit, and a display unit and hinge
Ordinateur avec un dispositif de télécommunication et comprenant une unité de système, une unitè clavier, et une unité d'affichage et une charnière

(30) Priorität: 05.01.1998 GB 9800121
(43) Veröffentlichungstag der Anmeldung: 07.07.1999
(73) Patentinhaber: SIEMENS AKTIENGESELLSCHAFT, 80333 München (DE)
(72) Erfinder: Riddiford, Martin, London SE21 7DF (GB); Witts, Martin, Abbots, Berkshire RG7 4EE (GB)

(56) Entgegenhaltungen:
- EP-A- 0 535 912
- EP-A- 0 801 489
- DE-U- 29 610 265
- US-A- 4 839 837
- US-A- 5 697 124
- PATENT ABSTRACTS OF JAPAN vol. 017, no. 363 (P-1570), 8. Juli 1993 & JP 05 053685 A (MATSUSHITA ELECTRIC IND CO LTD), 5. März 1993 & JP 05 053685 A (MATSUSHITA ELECTRIC IND CO)

## Beschreibung

Die vorliegende Erfindung betrifft einen aus einer Systemeinheit, einer Tastatureinheit sowie einer Anzeigeeinheit bestehenden Computer mit Telekommunikationseinrichtung, wobei die genannten Einheiten um eine gemeinsame Achse schwenkbar gelagert sind und die jeweils außenliegende Tastatureinheit und die Systemeinheit in der geschlossenen und in der um 180° geklappten Lage arretiert sind und die Anzeigeeinheit in einer Stellung von 0 bis 90° in bezug auf die Systemeinheit schwenkbar und arretierbar ist und einem scharnier.

Ein aus einer Systemeinheit (3), einer Tastatureinheit (2) sowie einer Anzeigeeinheit (11) bestehender Computer mit Telekommunikationseinrichtung, wobei die genannten Einheiten (2, 3, 11) um eine gemeinsame Achse (33) schwenkbar gelagert sind und die jeweils außenliegende Tastatureinheit (2) und die Systemeinheit (3) in der geschlossenen und in der um 180° geklappten Lage arretiert sind ist aus DE 296 10 265 bekannt.

Die Erfindung betrifft nun die Anzeigeeinheit (11) die in einer Stellung von 0° bis 90° in bezug auf die Systemeinheit (3) schwenkbar und arretierbar ist und daß auf der Achse (33) Elemente schwenkbar angeordnet sind, die mit der Systemeinheit (3) und mit der Tastatureinheit (2) verbunden sind, wobei die Elemente (34, 35) entgegen Federkraft und unter Überwindung eines Sperrgliedes (37, 38, 39), in die genannten Lagen geführt und arretiert sind.

Durch eine derartige Gestaltung braucht das Gerät zur Eingabe von Daten oder zur Beschriftung der Anzeigeeinheit nur um 180° aufgeklappt zu werden und bildet aufgrund seiner Arretierung in dieser Lage eine stabile Unterlage für die schwenkbare und in der gewünschten Lage fixierbare Anzeigeeinheit. Diese Gerätekonfiguration - Tastatureinheit um 180° zur Systemeinheit aufgeklappt und arretiert - kann vorteilhaft bei mobilem Betrieb, z. B. in einem Zug zum Einsatz gelangen, wobei die Anzeigeeinheit auf der Systemeinheit aufliegt.

Aufgabe der vorliegenden Erfindung ist es nun, eine Lagerung zwischen der Systemeinheit und der Tastatureinheit aufzuzeigen, die einmal ein einfaches Verschwenken der beiden Teile gestattet und zugleich die beiden Geräteeinheiten im geschlossenen und im 180° aufgeklappten Zustand gegen ein unerwünschtes Verschwenken sichert.

Diese Aufgabe wird durch die Merkmale des Anspruch 1 gelöst. Dabei sind auf der Achse Elemente schwenkbar angeordnet, die mit der Systemeinheit und der Tastatureinheit verbunden sind, wobei die Elemente entgegen

Federkraft und unter Überwindung eines Sperrgliedes in die genannten Lagen geführt und arretiert sind.

Durch Vorsehen eines Sperrgliedes können somit die beiden angeführten definierten Lagen von Systemeinheit zu Tastatureinheit auf einfache Weise realisiert werden. Dem Benutzer des Gerätes wird das Gefühl vermittelt, daß er z. B. beim Aufklappvorgang zunächst das Sperrglied bei gleichzeitig wachsendem Federdruck überwunden muß, um wiederum bei nachlassendem Federdruck in die andere Gebrauchslage zu gelangen.

Hierbei kann mit der Systemeinheit ein Ansatz und mit der Tastatur ein Steg verbunden sein, wobei an dem Ansatz eine in Richtung Steg weisende, als Sperrglied wirkende Nase mit keilförmig ansteigenden Flanken angeordnet ist, wobei ferner die Feder auf den Steg wirkt und wobei der Ansatz gegen ein Verschieben auf der Achse gesichert ist. Beim Verschwenken der Tastatureinheit aus dem geschlossenen Zustand in die aufgeklappte Lage trifft eine Seitenfläche des unter Federdruck stehenden Steges auf die ansteigende Flanke der Nase. Der Druck der Feder nimmt dann bis zur Nasenspitze zu und anschließend nach Auftreffen der genannten Seitenfläche des Steges auf die abfallende Flanke allmählich wieder ab, bis die aufgeklappte Endlage erreicht ist.

Die Feder selbst kann als Spiraldruckfeder auf der Achse zwischen dem Steg und einer Schwenkachsenaufnahme angeordnet sein. Dabei können die an der Systemeinheit wie auch an der Tastatureinheit befestigten Elemente gegen ein unerwünschtes Verschieben auf der Achse entgegen der Federkraft durch entsprechende Anschläge an den Lagerstellen gesichert sein. Gemäß einer bevorzugten Ausführungsform ist auf der Achse eine Preßbuchse befestigt, die an dem Ansatz zur Anlage gelangt.

Die Erfindung soll im folgenden anhand eines Ausführungsbeispiels näher erläutert werden.

Es zeigen jeweils in einer perspektivischen Darstellung
Figur 1 eine Explosionszeichnung des Gerätes,
Figur 2 das Gerät im aufgeklappten Zustand,
Figur 3 eine vergrößerte Ansicht des Kreisausschnittes A in Figur 2,
Figur 4 ein Detail der Klappverbindung,
Figur 5 das Gerät im zusammengeklappten Zustand,
Figur 6 eine vergrößerte Ansicht des Kreisausschnittes B in Figur 5,
Figur 7 ein Detail der Klappverbindung.

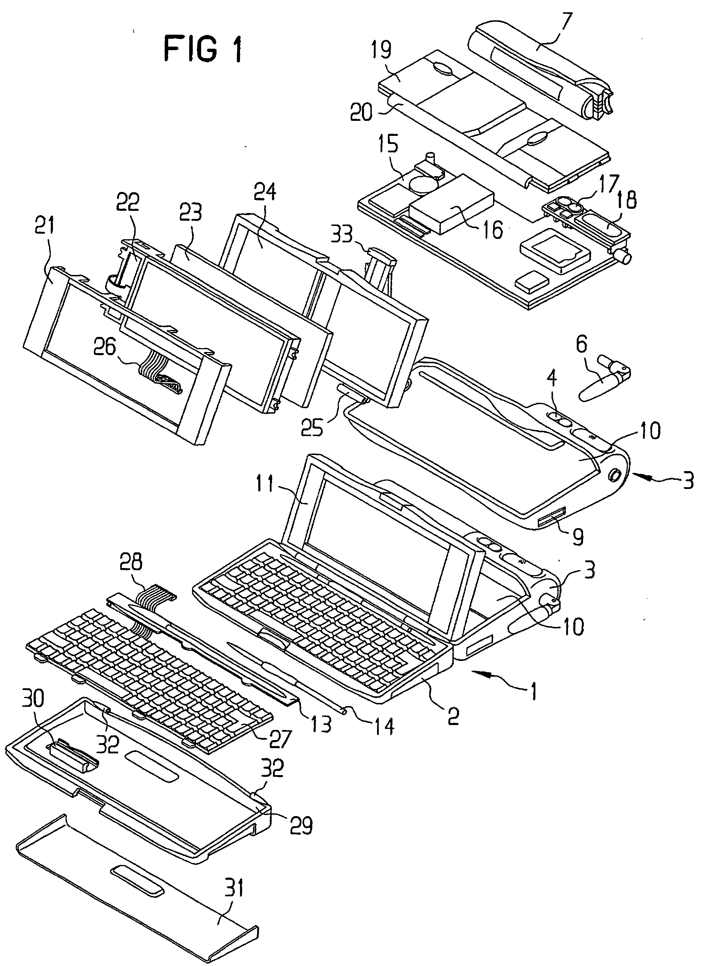

Die Figur 1 zeigt in einer perspektivischen Explosionszeichnung den wesentlichen Aufbau des in der Bildmitte zusammengesetzten Gerätes 1.

Die in der oberen Bildebene befindliche Systemeinheit 3 weist neben den Bedienungselementen 4 und 9 sowie der Antenne 6 eine Rechnerplattform 15 mit dem Computer und Speicher 16, entsprechende Module 17 und Komponenten z. B. Lautsprecher 18 und Mikrofon für den Kommunikationsbetrieb, entsprechende Steckelemente zur Aufnahme von z. B. Kopfhörer, Batteriefach 7 sowie weitere Peripheriekomponenten z. B. nicht flüchtige Speicher, Kartenleseeinrichtungen usw. auf. Die Rechnerplattform 15 wird mit der Abdeckung 19 verschlossen, die an einer Längsseite eine Schwenkachsenaufnahme 20 besitzt. Diese Abdeckung 19 weist auf ihrer der Rechnerplattform 15 abgewandten Seite weitere, von außen erreichbare Zugänge zum Einbringen von SIM- oder Miniaturkarten für den Telefonbetrieb auf. Das Herstellen einer Telefonverbindung kann bei angeschaltetem Gerät durch Zifferneingabe über die Tastatur 27 oder durch Berühren von auf der LCD-Anzeige 22 erscheinenden Symbolen oder durch Einschreiben von Ziffern oder Zeichen mittels des Eingabestiftes 14 auf der LCD-Anzeige 22 erfolgen. Die im zusammengeklappten Zustand des Gerätes befindliche Auβenfläche der Systemeinheit 3 ist wie die Außenseite der Tastatureinheit 2 frei von Bedienungselementen, so daß ein ungewolltes Auslösen irgendwelcher Funktionen bei versehentlich eingeschaltetem Gerät ausgeschlossen ist.

Die in der Bildmitte dargestellte Anzeigeeinheit 11 setzt sich aus dem Abdeckrahmen 21, dem LCD-Display 22 mit Flachbandkabel 26, der Abstandsplatte 23, dem Displaygehäuse 24 sowie einem Halteteil 33 zusammen. An dem Displaygehäuse 24 sind wiederum zwei Schwenkachsenaufnahmen 25 an einer seiner Längskanten angeordnet.

Die Anzeigeeinheit 11 kann, wie bereits erwähnt, zu Zwecken der Zeicheneingabe mittels des Eingabestiftes 14 entweder flach innerhalb der Aufnahme 10 der Systemeinheit 3 gehaltert sein oder in einem vorgegebenen Winkel bis zu 90° aufgerichtet und in dieser Lage arretiert sein. Die Anzeigeeinheit 11 kann auch über einen Winkel von 90° verschwenkt werden, um einen besseren Zugang zu den auswechselbaren Peripherieeinheiten auf der Oberseite der Systemeinheit 3 zu ermöglichen.

Die in der unteren Bildhälfte dargestellte Tastatureinheit 2 besteht aus der Tastatur 27 mit dem Flachbandkabel 28, die in das Tastaturgehäuse 29 eingebracht und dort z. B. mittels der Halterung 30 arretiert wird. Auf die im zusammengeklappten Zustand des Gerätes befindliche Außenseite wird ein Deckel 31 aufgeschnappt, der im Bedarfsfall den Zugang zu den Bauteilen der Tastatureinheit 2 ermöglicht. In das Tastaturgehäuse ist ferner die Ablage 13 für den Eingabestift 14 eingebracht. An den Außenbereichen einer Längskante des Tastaturgehäuses sind wiederum konisch zulaufende Lagerbuchsen 32 zur Aufnahme der allen drei Komponenten gemeinsamen Achse 33.

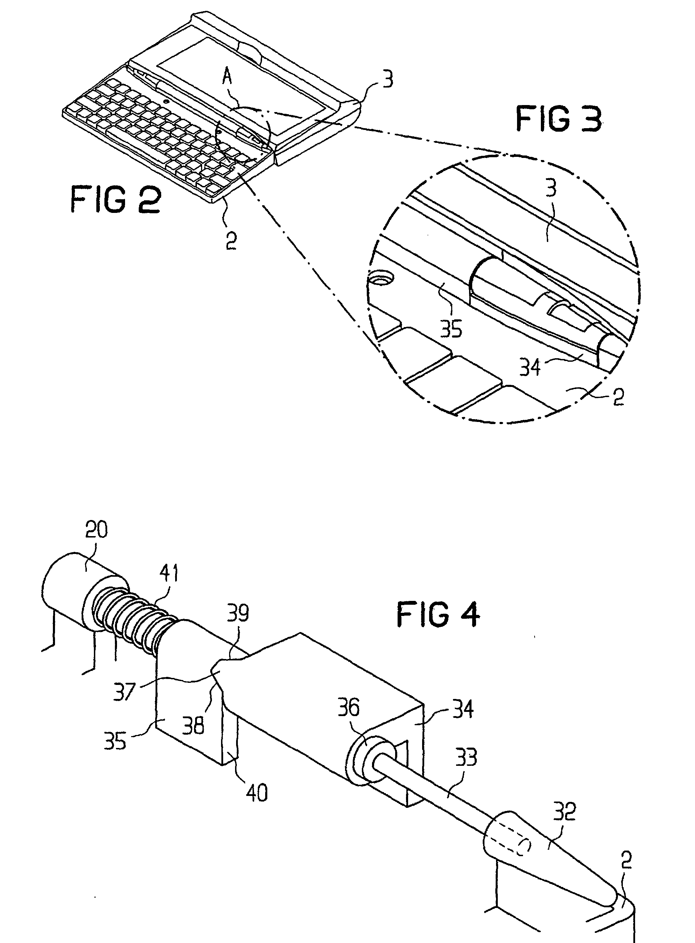

Figur 2 zeigt das Gerät 1 im aufgeklappten Zustand, d. h. die Tastatur 2 ist um 180° in bezug auf die Systemeinheit 3 verschwenkt. Die Anzeigeeinheit 11 befindet sich innerhalb einer Aufnahme 10 der Systemeinheit 3.

Mit der Systemeinheit 3 ist der auf der Achse 33 gelagerte Ansatz 34 und mit der Tastatureinheit 2 der ebenfalls auf der Achse 33 gelagerte Steg 35 fest verbunden. Weitere Lagerstellen für die Achse 33 bilden die Lagerbuchsen 32 an der Tastatureinheit 2 sowie die Schwenkachsenaufnahme 20 an der Systemeinheit 3.

Zwischen dem Steg 35 und der Schwenkachsenaufnahme 20 ist eine Spiraldruckfeder 41 auf der Achse angeordnet. Der Ansatz 34 wird durch eine Preßbuchse 36, die auch auf der Achse mittels einer Schraubverbindung befestigt sein kann, gegen ein Verschieben auf der Achse gesichert. In Richtung des Steges 35 weist der Ansatz 34 eine Nase 37 mit keilförmig ansteigenden Flanken 38 und 39 auf.

Beim Verschwenken der Tastatureinheit 2 aus dem geschlossenen in den um 180° geöffneten Zustand gelangt der Steg 35 mit seiner Seitenfläche 40 zunächst an die Flanke 39 der Nase. Bei weiterem Verschwenken der Tastatureinheit wird gegen die Kraft der Spiraldruckfeder 41 die Nasenspitze überwunden und die Tastatureinheit 2 durch Entlanggleiten der Fläche 40 des Steges 35 an der anderen Flanke 38 durch Federkraft in die in den Abbildungen 2 bis 4 gezeigte Lage geführt und dort arretiert.

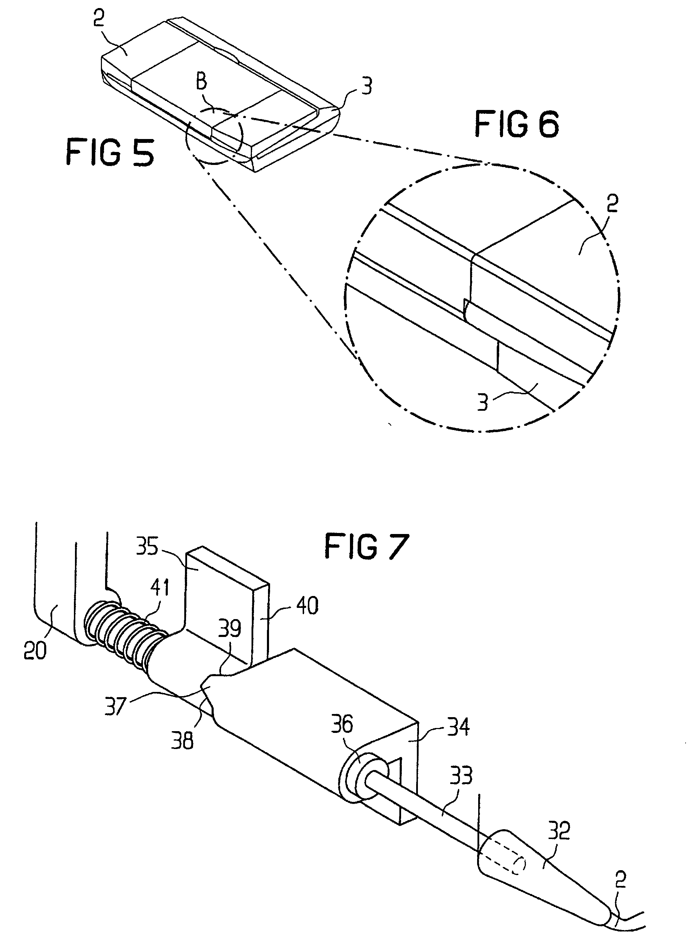

Beim Vorgang des Zuklappens der Tastatureinheit 2 in Richtung der Systemeinheit 3 trifft, vom Zustand der Geräteteile nach Figur 4 ausgehend, die Seitenfläche 40 des Steges 35 auf die Flanke 38 der Nase 37, überwindet gegen Federkraft der Spiraldruckfeder 41 die Nasenspitze und gleitet an der Flanke 39 der Nase 37 in die in den Figuren 5 bis 7 gezeigte Lage. Indieser Lage sind die Tastatureinheit und die Systemeinheit wiederum zueinander fixiert.

## Patentansprüche

1. Computer bestehend aus einer Systemeinheit (3), einer Tastatureinheit (2) sowie einer Anzeigeeinheit (11) mit Telekommunikationseinrichtung und einer Lagerung, wobei die genannten Einheiten (2, 3, 11) um eine gemeinsame Achse (33) schwenkbar gelagert sind und die jeweils außenliegende Tastatureinheit (2) und die Systemeinheit (3) in der geschlossenen und in der um 180° geklappten Lage arretiert sind **dadurch gekennzeichnet daß**, die Anzeigeeinheit (11) in einer Stellung von 0 bis 90° in bezug auf die Systemeinheit (3) schwenkbar und arretierbar ist, und daß auf der Achse (33) Elemente schwenkbar angeordnet sind, die mit der Systemeinheit (3) und mit der Tastatureinheit (2) verbunden sind, wobei die Elemente (34, 35) entgegen Federkraft und unter Überwindung eines Sperrgliedes (37, 38, 39) in die genannten Lagen geführt und arretiert sind.

2. Lagerung nach Anspruch 1, **dadurch gekennzeichnet, daß** mit der Systemeinheit (3) ein Ansatz (34) und mit der Tastatureinheit (2) ein Steg (35) verbunden ist, wobei an dem Ansatz (34) eine in Richtung des Steges (35) weisende, als Sperrglied wirkende Nase (37) mit keilförmig ansteigenden Flanken (38, 39) angeordnet ist, wobei ferner die Feder (41) auf den Steg (35) wirkt und wobei der Ansatz (34) gegen ein Verschieben auf der Achse gesichert ist.

3. Lagerung nach Anspruch 1, **dadurch gekennzeichnet, daß** die Feder als Spiraldruckfeder (41) auf der Achse zwischen dem Steg (35) und einer Schwenkachsenaufnahme (20) angeordnet ist.

4. Lagerung nach Anspruch 1, **dadurch gekennzeichnet, daß** die Elemente (34, 35) gegen ein Verschieben auf der Achse durch eine Preßbuchse (36) gesichert sind, die an dem Ansatz (34) zur Anlage gelangt.

## Claims

1. Computer comprising a system unit (3), a keyboard unit (2) and a display unit (11), having a telecommunication device and a bearing assembly, where said units (2, 3, 11) are pivotably mounted about a common axis (33), and the respectively external keyboard unit (2) and the system unit (3) are locked in the closed position and in the position opened through 180°, **characterized in that** the display unit (11) can be pivoted and locked in a position from 0 to 90° with respect to the system unit (3), and **in that** the axis (33) has elements pivotably arranged on it which are connected to the system unit (3) and to the keyboard unit (2), the elements (34, 35) being put into said positions, and locked, counter to spring force and by overcoming a blocking element (37, 38, 39).

2. Bearing assembly according to Claim 1, **characterized in that** the system unit (3) has an attachment (34) connected to it and the keyboard unit (2) has a crosspiece (35) connected to it, the attachment (34) having a projection (37) arranged on it which points in the direction of the crosspiece (35), acts as a blocking element and has sides (38, 39) rising in the shape of a wedge, with the spring (41) additionally acting on the crosspiece (35), and the attachment (34) being prevented from displacement on the axis.

3. Bearing assembly according to Claim 1, **characterized in that** the spring is arranged as a spiral compression spring (41) on the axis between the crosspiece (35) and a pivot axis receptacle (20).

4. Bearing assembly according to Claim 1, **characterized in that** the elements (34, 35) are prevented from displacement on the axis by a pressing bush (36) which rests against the attachment (34).

## Revendications

1. Ordinateur composé dune unité système (3), d'une unité clavier (2) ainsi que dune unité d'affichage (11), avec un dispositif de télécommunication et un logement, les unités citées (2, 3, 11) étant placées de manière pivotante autour d'un axe commun (33) et l'unité clavier (2) extérieure et l'unité système (3) étant à chaque fois bloquées en position fermée et en position ouverte à 180°, **caractérisé en ce que** l'unité d'affichage (11) peut être pivotée et bloquée dans une position de 0 à 90° par rapport à l'unité système (3), et **en ce que** des éléments sont disposés de manière pivotante autour de l'axe (33), qu'ils sont raccordés à l'unité système (3) et à l'unité clavier (2), les éléments (34, 35) étant guidés et bloqués dans les positions citées contre la tension du ressort et en faisant pénétrer un organe de blocage (37, 38, 39).

2. Logement selon la revendication 1, **caractérisé en ce qu'**un épaulement (34) est raccordé à l'unité système (3) et qu'une entretoise (35) est raccordée à l'unité clavier (2), un taquet (37), indiquant la direction de l'entretoise (35), agissant comme un organe de blocage et étant placé sur l'épaulement (34) avec des flancs (38, 39) montant en forme de coin, le ressort (41) agissant en outre sur l'entretoise (35), et l'épaulement (34) étant bloqué par rapport à un déplacement sur l'axe.

3. Logement selon la revendication 1, **caractérisé en ce que** le ressort est disposé comme ressort de pression à spirale (41) sur l'axe entre l'entretoise (25) et un logement d'axe de pivotement (20).

4. Logement selon la revendication 1, **caractérisé en ce que** les éléments (34, 35) sont bloqués par rapport à un déplacement sur l'axe au moyen dune douille de pression (36) qui prend appui sur l'épaulement (34).
